# EUROPÄISCHE PATENTSCHRIFT

(11) **EP 3 556 540 B1**
(45) Veröffentlichungstag und Bekanntmachung des Hinweises auf die Patenterteilung: **05.01.2022**
(21) Anmeldenummer: 19165435.9
(22) Anmeldetag: 27.03.2019
(51) Int. Cl.: B29C 65/06, B29L 31/30

(54) **VIBRATIONSSCHWEISSVORRICHTUNG, VERFAHREN ZUM VERBINDEN VON MINDESTENS ZWEI LÄNGLICHEN BAUTEILEN MITTELS VIBRATIONSSCHWEISSEN SOWIE EIN HERSTELLUNGSVERFAHREN FÜR DIE VIBRATIONSSCHWEISSVORRICHTUNG**
VIBRATION WELDING DEVICE, METHOD FOR JOINING AT LEAST TWO ELONGATED COMPONENTS BY MEANS OF VIBRATION WELDING AND METHOD FOR THE PRODUCTION OF SAID VIBRATION WELDING DEVICE
DISPOSITIF DE SOUDAGE PAR VIBRATIONS, PROCÉDÉ DE RACCORDEMENT D'AU MOINS DEUX PIÈCES DE CONSTRUCTION ALLONGÉES AU MOYEN D'UN SOUDAGE PAR VIBRATIONS AINSI QUE PROCÉDÉ DE FABRICATION DU DISPOSITIF DE SOUDAGE PAR VIBRATIONS

(30) Priorität: 16.04.2018 DE 102018108979
(43) Veröffentlichungstag der Anmeldung: 23.10.2019
(73) Patentinhaber: Branson Ultraschall Niederlassung der Emerson Technologies GmbH & Co. oHG, 63128 Dietzenbach (DE)
(72) Erfinder: Lotz, Wilfried, 63543 Neuberg (DE)
(74) Vertreter: Heyer, Volker

(56) Entgegenhaltungen:
- EP-A2- 1 772 253
- JP-A- 2008 238 111
- TW-A- 201 006 661

## Beschreibung

### 1. Gebiet der Erfindung

Die vorliegende Erfindung betrifft eine Vibrationsschweißvorrichtung mit einem mechanisch gekoppelten Mehrfachschwinger. Zudem betrifft vorliegende Erfindung die Verwendung einer Vibrationsschweißvorrichtung zum Verschweißen von mindestens zwei länglichen Bauteilen, ein Verfahren zum Verbinden von mindestens zwei länglichen Bauteilen mithilfe der genannten Vibrationsschweißvorrichtung sowie ein Herstellungsverfahren für die Vibrationsschweißvorrichtung, in der mehrere elektromechanische Schwinger mechanisch gekoppelt werden.

### 2. Hintergrund der Erfindung

In der Kunststoffverbindungstechnik ist das Vibrationsschweißen ein bekanntes Verfahren. Hierbei werden zwei Kunststoffteile mittels Reibung und dabei erzeugter Wärme verbunden. Im Allgemeinen wird ein Kunststoffteil festgehalten und das andere unter Druck linear bzw. orbital gegen das andere Kunststoffteil bewegt.

Beim linearen Vibrationsschweißen erfolgt die relative Bewegung der Kunststoffteile gegeneinander entlang der längeren Seite der Geometrie des schwingenden Bauteils. Um das Bewegen gegen Schrägen zu verhindern werden die Bauteile über ein Werkzeug dergestalt in die Maschine gelegt, dass in Bewegungsrichtung eine möglichst ebene Schweißfläche entsteht.

Bei länglichen Teilen wird konstruktiv die Schweißnahtgestaltung so gewählt, dass die Schweißrichtung in Richtung der längsten Seite des Bauteiles erfolgt.

Wenn nun in der Längsrichtung das Bauteil große Schrägen aufweist oder bspw. eine rechtwinklige Verlaufsänderung, z.B. L-förmig, vorhanden ist, ist ein Schwingen in Längsrichtung nicht möglich. Dies ist z.B. in der Automobilindustrie bei Stoßfängern, um die Ecke gehenden Rückleuchten und auch bei Armaturentafeln der Fall.

Aktuell geht der Trend zu durchgehenden, um die Ecke reichenden Rückleuchten. Dies sind Bauteile, die bei einer Tiefe in X-Richtung von typisch weniger als 20 cm eine Länge in Y-Richtung von fast 2 m oder mehr erreichen und U-förmig sind.

Aktuell werden diese Anwendungen folgendermaßen geschweißt:
Gemäß einer ersten Alternative wird eine Standard-Schweißmaschine mit Schwingrichtung in Y-Richtung genutzt, um ein längliches Bauteil mit Längserstreckung in Y-Richtung zu verschweißen. Das Bauteil wird um 90° gedreht, so dass die kürzere X-Achse des Bauteils nun in Y-Schwingungsrichtung der Schweißmaschine orientiert ist. Äquivalent dazu wäre auch ein Drehen des Schwingkopfes um 90° und Beibehaltung der Ausrichtung des Bauteils. In diesem Falle hängt das Bauteil weit seitlich über und die damit verbundene Massenverteilung führt zu einem asymmetrischen Schwingen (oder Torkeln) des Bauteils. Entsprechend ist die Schweißnaht/-verbindung mangelhaft. Auch ist die Ergonomie zum Be- und Entladen der Maschine ungünstig und fehlerträchtig.

In einer zweiten Alternative werden zwei Schwingköpfe in gleicher Orientierung wie in der ersten Alternative genutzt. Diese Anordnung hat den Nachteil, dass die beiden Schwingköpfe nur mit großem Regelungsaufwand phasensynchron schwingen. Ein weiterer Nachteil ergibt sich aufgrund der Unterschiede in den Schwingungsamplituden der verwendeten Schwingköpfe. Unterschiedliche Amplituden resultieren in ungleichmäßige Schweißergebnisse. Auch setzt dieser Umstand eine gewisse Flexibilität des zu verschweißenden Bauteils oder der Bauteilaufnahme (Oberwerkzeug) voraus, was sich ebenfalls negativ auf die Schweißergebnis auswirkt.

Zudem bilden zwei nebeneinander angeordnete Schwingköpfe eine zu geringe Baubreite für das längliche Bauteil ab, so dass Kunststoffteile, welche eine große Länge in Y-Richtung besitzen, nicht optimal an die Schwinger angepasst sind. Die Bauteile stehen ungünstig in Y-Richtung über die Schwingköpfe über und beeinflussen das Schwingverhalten negativ (neigen zum Torkeln). Andererseits sind zwei in Y-Richtung weit auseinander liegende Schwingköpfe schwer zu regeln, was sich auf das gewünschte Schwingverhalten in X-Richtung negativ auswirkt.

In einer dritten Alternative werden mehrere Schwingköpfe elektronisch gekoppelt. Diese Anordnung ist in EP 1 772 253 B1 "Vorrichtung und Verfahren zum Vibrationsschweißen" beschrieben. Hier sind N Schwingköpfe (N = 2 oder mehr) nebeneinander angeordnet und elektronisch gekoppelt, wobei ein Schwingkopf als Master dient und die anderen als Slave. Die Slaves werden auf die Amplitude und Phase des Masters geregelt, so dass alle schwingenden Einheiten phasen- und amplitudensynchron schwingen.

Der Vorteil dieses Verfahrens ist, dass jeder Schwingkopf als einzelne Einheit betrachtet wird und die maximale Anzahl der möglichen Schwingköpfe nur durch die Schnelligkeit der Regelung begrenzt wird. Bei dieser Anordnung individueller Schwingköpfe weist jede Schwingkopfanordnung ein getrenntes Werkzeug auf. Nachteilig ist dabei, dass alle Werkzeuge in Gewicht und Geometrie nahezu identisch sein müssen, um gleiche Frequenzen der Schwingköpfe zu erreichen. Die Vibrationsschwingköpfe werden nämlich immer in oder nahe der Resonanzfrequenz betrieben, welche gewichtsabhängig ist. Diese Frequenz muss bei allen Schwingköpfen gleich oder doch zumindest so nah beieinander sein, dass eine gemeinsame Regelung mit einer gemeinsamen Frequenz möglich ist. Eine Abweichung der Regelung eines einzelnen Schwingkopfes um nur 0,1 Hz führt jedoch bei einer Schwingfrequenz von 100 Hz nach nur 5 Sekunden zu einer Phasenumkehr des einzelnen Schwingkopfes. Selbst bei optimaler Regelung oder Steuerung der Frequenz kommt es während des An- und Ausschwingens noch zu kleinen Abweichungen in der Amplitude. Für die individuellen Schwingköpfe bzw. das Gesamtsystem ist das erstmal kein Problem. Dies verlangt jedoch eine gewisse Flexibilität im Kunststoffbauteil, welches diese Abweichungen letztlich aufnehmen muss, was wiederum zu einem schlechteren Schweißergebnis führt.

TW 201 006 661 A beschreibt ein Diffusionsverbindungsverfahren und eine entsprechende Vorrichtung, bei denen zwei Werkstücke jeweils an einer ersten Einspannvorrichtung und einer zweiten Einspannvorrichtung befestigt werden. Wenn der Abstand zwischen den zwei Einspannvorrichtungen gesteuert wird, um zu ermöglichen, dass die zwei Werkstücke miteinander verbunden werden, wird Wechselstrom an mehrere elektromagnetische Spulen geliefert, die an der Außenseite der Permanentmagnete angeordnet sind, die an zwei Seiten entlang der Schwingungsrichtung der ersten Einspannvorrichtung vorgesehen sind. Hierdurch wird eine abwechselnde magnetische Abstoßung und Anziehung zwischen den Permanentmagneten verursacht. Zusätzlich wird auch eine Hin- und Herbewegung in den Resonanzfedern realisiert, die zwischen den zwei Permanentmagneten angeordnet sind. Dies erfolgt aufgrund der elektromagnetischen Welle, die durch den Wechselstrom in den elektromagnetischen Spulen erzeugt wird. Auf diese Weise wird ermöglicht, dass die erste Einspannvorrichtung vibriert. Währenddessen wird das an der ersten Einspannvorrichtung befestigte Werkstück gegen ein anderes damit verbundenes Werkstück gedrückt, um Reibungswärme zu erzeugen. Die Grenzfläche der zwei Werkstücke wird auf diese Weise geschmolzen, um dazwischen einen Diffusionsverbindung zu bilden.

Ein weiteres Diffusionsverbindungsverfahrens ist in JP 2008 238111 A beschrieben. Hier wird einer Magnetspule Wechselstrom zugeführt. Eine Abstoßung wird zwischen der Magnetspule eines Magnetkreises und einem Permanentmagneten erzeugt, und eine Adsorption wird zwischen der Magnetspule eines anderen Magnetkreises und dem Permanentmagneten erzeugt. Die Abstoßung und die Adsorption zwischen der Magnetspule des Magnetkreises und dem Permanentmagneten ändern sich abwechselnd. Eine Resonanzfeder schwingt mit elektromagnetischen Wellen mit, die durch die Wechselstromversorgung der Magnetspule erzeugt werden. Ein Werkstück schwingt horizontal, da sich die Abstoßung und die Adsorption der Magnetkreise abwechselnd ändern, sowie aufgrund der Resonanz der Resonanzfeder.

Es stellt sich somit die technische Aufgabe, eine alternative Konstruktion einer Vibrationsschweißvorrichtung bereitzustellen, mit der gerade langgestreckte U-förmige oder L-förmige Bauteile mittels Vibrationsschweißen verbindbar sind.

### 3. Zusammenfassung der Erfindung

Die obige Aufgabe wird durch eine Vibrationsschweißvorrichtung gemäß dem unabhängigen Patentanspruch 1, die Verwendung einer Vibrationsschweißvorrichtung gemäß dem unabhängigen Patentanspruch 6, ein Verfahren zum Verbinden von mindestens zwei länglichen Bauteilen mittels einer Vibrationsschweißvorrichtung gemäß dem unabhängigen Patentanspruch 7 sowie durch ein Herstellungsverfahren für eine Vibrationsschweißvorrichtung gemäß dem unabhängigen Patentanspruch 9 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Die erfindungsgemäße Vibrationsschweißvorrichtung mit einem mechanisch gekoppelten Mehrfachschwinger weist die folgenden Merkmale auf: mindestens drei Schwingeinheiten jeweils bestehend aus mindestens einem Paar einander gegenüberliegender elektromagnetischer Spulen, mit denen ein dazwischen angeordneter federunterstützter Schwinger in lineare Schwingungen in einer ersten Richtung versetzbar ist, ein längliches Werkzeug, mit dem ein zu verschweißendes Bauteil bewegbar ist und welches mit allen Schwingeinheiten mechanisch verbunden ist, wobei die Schwingeinheiten in Bezug auf das längliche Werkzeug derart angeordnet sind, dass die erste Richtung der Schwingungen der einzelnen Schwingeinheiten annähernd quer zu einer Längsachse des Werkzeugs ausgerichtet ist, sodass während eines Vibrationsschweißvorgangs zwei Bauteile durch Schwingungen ungleich einer Längsrichtung der Bauteile, insbesondere quer zu einer Längsrichtung, miteinander verschweißbar sind.

Beim Vibrationsschweißen von lang gestreckten Bauteilen, die vorzugsweise eine U-Form oder eine L-Form aufweisen, hat es sich als vorteilhaft erwiesen, wenn eine Mehrzahl von bekannten Schwingeinheiten aus dem technischen Gebiet des Vibrationsschweißens, hier mindestens drei Schwingeinheiten, mit ihrer Schwingungsrichtung annähernd senkrecht zu einer Längsrichtung von miteinander zu verschweißenden länglichen Bauteilen angeordnet werden. Aufgrund ihrer Anordnung erzeugen die mehreren Schwingeinheiten eine relative Querschwingung der miteinander zu verbindenden Bauteile in Bezug auf deren Längsachse. Da die mindestens drei Schwingeinheiten durch ein gemeinsames Werkzeug oder ein entsprechendes Kopplungselement zwischen Werkzeug und den Schwingeinheiten mechanisch miteinander gekoppelt sind, lassen sich bevorzugt die Schwingeinheiten in ihren Schwingungseigenschaften, wie Amplitude und Frequenz, aufeinander abstimmen. Entsprechend bilden diese mehreren untereinander mechanisch gekoppelten, vorzugsweise doppelt mechanisch gekoppelte, Schwingeinheiten oder Schwingköpfe (siehe unten) den mechanisch gekoppelten Mehrfachschwinger. Diese Konstruktion gewährleistet, dass gleichmäßige Querschwingungen der mindestens drei Schwingeinheiten oder Schwingköpfe über das Werkzeug derart auf die miteinander zu verbindenden Bauteile übertragen werden, dass diese trotz der nicht in Längsrichtung verlaufenden Vibrationsschwingungen verlässlich miteinander verbunden werden. Zudem hat sich gezeigt, dass die Nutzung von mindestens drei Schwingeinheiten eine ausreichende Erstreckung der miteinander zu verbindenden Bauteile in deren Längsrichtung ermöglicht, sodass beispielsweise ein Torkeln des bewegten Bauteils ausreichend reduziert wird.

Gemäß einer bevorzugten Ausführungsform vorliegender Erfindung sind mindestens drei Schwingeinheiten an einer gemeinsamen Brücke federunterstützt befestigt.

Weiterhin bevorzugt sind die mindestens drei Schwingeinheiten oder Schwingköpfe (siehe unten) gleichmäßig verteilt über die Längsrichtung des Werkzeugs an der gemeinsamen Brücke oder einer die Schwingköpfe verbindenden Komponente befestigt. Aufgrund dieser gleichmäßig verteilten Anordnung werden die Schwingungen annähernd quer zur Längsachse des Werkzeugs über das Werkzeug gleichmäßig auf annähernd die gesamte Längserstreckung des mit dem Werkzeug verbindbaren Bauteils übertragen.

Eine bekannte Schwingeinheit zum Vibrationsschwingen besteht aus dem bereits oben genannten mindestens einen Paar voneinander gegenüberliegend angeordneten elektromagnetischen Spulen sowie einem dazwischen angeordneten federunterstützten Schwinger. Der Schwinger ist über ein Federpaket an einer die elektromagnetischen Spulen bevorzugt überspannenden Brücke gehalten. An der der Brücke abgewandten Seite des Schwingers ist ein Oberwerkzeug direkt oder über ein Kopplungselement am Schwinger befestigt. Zur Abstimmung der Schwingungen zwischen den mindestens drei Schwingeinheiten hat es sich als vorteilhaft erwiesen, die einzelnen Schwingeinheiten über nur eine gemeinsame Brücke miteinander zu verbinden. In Analogie dazu (siehe unten) werden mehrere Schwingköpfe mechanisch aneinander gekoppelt, um als nur ein Schwingkopf zu wirken. Diese gemeinsame Brücke, die sonst einzeln in jeder Schwingeinheit vorgesehen ist, bildet eine gleichzeitige Basis für alle daran befestigten Schwingeinheiten und Federpakete. Dabei profitiert die Basis von der sich addierenden Masse der Einzelbrücken zu einer Schwingungs-Gesamtmasse, die sonst in jeder einzelnen Schwingeinheit vorgesehen wären.

Neben einer bevorzugt gezielten Abstimmung, Stabilisierung und Vereinheitlichung der Schwingungen der einzelnen Schwingungseinheiten oder Schwingköpfe zu einer Gesamtschwingung wird diese gezielt über die gleichmäßig verteilte Anordnung der Schwingeinheiten oder Schwingköpfe auf das Werkzeug und das Bauteil übertragen. Dabei sind die Schwingeinheiten oder Schwingköpfe vorzugsweise in Abstimmung mit der Längserstreckung des Werkzeugs gleichmäßig lateral beabstandet zueinander angeordnet. Diese Anordnung gewährleistet, dass die mechanisch gekoppelten Schwingeinheiten oder Schwingköpfe die Querschwingungen im gesamten Längenbereich des Werkzeugs übertragen, um ein gleichmäßiges Schwingen zu unterstützen und ein Torkeln des Bauteils zu reduzieren.

Gemäß einer weiteren bevorzugten Ausfiihrungsform vorliegender Erfindung bildet eine der mehreren Schwingeinheiten eine Master-Schwingeinheit, während die verbleibenden Schwingeinheiten jeweils eine Slave-Schwingeinheit in Bezug auf die Master-Schwingeinheit bilden, sodass alle Schwingeinheiten synchron betreibbar sind.

Diese Art der abgestimmten Steuerung einer Mehrzahl von Schwingeinheiten ist aus EP 1 772 253 B1 bekannt, auf die in Bezug auf die Ausgestaltung einer derartigen Master-Slave-Steuerung eindeutig Bezug genommen wird.

In bevorzugter Ergänzung zur oben beschriebenen mechanischen Kopplung und damit Synchronisation mehrerer Schwingeinheiten und/oder Schwingköpfe werden diese elektronisch gekoppelt. Dazu wird eine Master-Slave-Schaltung eingesetzt. Entsprechend bildet die Master-Slave-Schaltung eine zusätzliche Absicherungsstufe für einen abgestimmten Betrieb der mehreren Schwingeinheiten und/oder Schwingköpfe.

Auf diese Weise wird eine mögliche Restneigung eines Werkstücks zum Torkeln während eines Schweißvorgangs reduziert.

Weiterhin bevorzugt weist die Vibrationsschweißvorrichtung gemäß einer anderen Ausgestaltung mindestens drei Schwingköpfe auf, die den mechanisch gekoppelten Mehrfachschwinger bilden. Diese Schwingköpfe umfassen jeweils mindestens ein Paar einander gegenüberliegend angeordneter elektromagnetischer Spulen mit einem zwischen diesen Spulen angeordneten Schwinger. Der Schwinger ist jeweils über ein Federpaket schwingend an einer Brücke befestigt. Diese bevorzugte Ausführungsform zeichnet sich des Weiteren dadurch aus, dass die Brücken der mehreren Schwingköpfe mechanisch miteinander verbunden sind und dass die Schwingköpfe zudem über das längliche Werkzeug miteinander verbunden sind.

In Analogie zu der oben beschriebenen Kombination mehrerer Schwingeinheiten ist es ebenfalls bevorzugt, bereits vorhandene als Einheit erhältliche Schwingköpfe miteinander zu koppeln. Entsprechend der Idee vorliegender Erfindung werden mindestens drei Schwingköpfe an vorzugsweise zwei Seiten mechanisch gekoppelt. Dabei bildet die eine Kopplungsseite die mechanische Verbindung der einzelnen Brücken dieser Schwingköpfe. Die andere Kopplungsseite wird durch ein die Schwingköpfe verbindendes Werkzeug oder ein zwischen Werkzeug und Schwingkopf angeordnetes Kopplungselement gebildet.

Durch das gemeinsame miteinander Koppeln der Brücken und/oder das gemeinsame miteinander Koppeln der Schwingereinheiten, sei es durch eine gemeinsame Grundplatte, an die das Werkzeug geschraubt wird, oder durch das Werkzeug selbst, entsteht aus N Schwingköpfen eine als nur ein Schwingkopf wirkende physische Einheit. Dies resultiert in nur einer Resonanzfrequenz und einer Schwingrichtung. Dabei spielt es dann keine Rolle mehr, ob das Gewicht des Werkzeugs auf die N Schwingerplatten gleichmäßig verteilt wird oder nicht, da nun die Gesamtmasse der Schwingereinheiten die neue schwingende Masse bildet. Entsprechend stellt diese mechanische Verbindung der mehreren Schwingköpfe sicher, dass die mehreren Schwingköpfe phasensynchron und des Weiteren mit der gleichen Amplitude schwingen.

Es hat sich gezeigt, dass Schwingköpfe umso besser, d.h. mit umso weniger Energieaufwand und geringerer Torkelneigung schwingen, wenn sie in ihren masserelevanten Abmessungen in Schwingrichtung länger als quer zur Schwingrichtung gestaltet sind. Gemäß einer weiteren bevorzugten Ausführungsform der unterschiedlichen Ausgestaltung der oben beschriebenen Vibrationsschweißvorrichtung bilden die mehreren Schwingeinheiten oder die mehreren Schwingköpfe eine mechanische Gesamteinheit, welche annähernd eine rechteckige Kontur mit einem Seitenverhältnis von A/B ≥ 1,0, aufweist, wobei eins einen unteren Grenzwert bildet. In diesem Zusammenhang ist es weiter bevorzugt, das Seitenverhältnis im Rahmen der konstruktiven und ergonomischen Möglichkeiten der Schwingvorrichtung möglichst groß zu wählen.

In diesem Zusammenhang beschreiben A und B die Seitenlängen der Gesamteinheit, die zur Masse der Gesamteinheit wesentlich betragen. Es wird davon ausgegangen, dass lediglich die Vorrichtung verkleiden Gehäuseteile nicht zur Masse der Gesamteinheit wesentlich beitragen. Vielmehr tragen gekoppelte Brücken, Grundplatten, Werkzeuge, Schwingeinheiten und dergleichen zur Gesamtmasse wesentlich bei. Dabei verläuft die Seite A annähernd parallel zu der ersten Richtung der Schwingungen der Schwingeinheiten oder Schwingköpfe und die Seite B verläuft annähernd parallel zu einer Längsachse des Werkzeugs.

Es hat sich gezeigt, dass eine Größe und Anordnung der Gesamteinheit gemäß den obigen Abmessungen das Schwingverhalten der mehreren miteinander verbundenen Schwingeinheiten oder Schwingköpfe mechanisch unterstützt. Insbesondere bewirkt sie, dass die mechanisch miteinander verbundenen mehreren Schwingeinheiten oder Schwingköpfe wie ein einziger Schwingkopf wirken. In diesem Zusammenhang ist gerade die Größe des Seitenverhältnisses der Gesamteinheit von Bedeutung. Je größer das Seitenverhältnis ist, umso ausgeprägter ist die Tendenz des Gesamtsystems in der ersten Richtung, also parallel zur Seite A, zu schwingen. Der mit der Konstruktion der Gesamteinheit verbundene Einfluss sorgt vorzugsweise für eine harmonische Schwingung der miteinander verbundenen Schwingeinheiten oder Schwingköpfe mit gleicher Frequenz, Phase und Amplitude.

Gemäß einer weiteren bevorzugten Ausführungsform vorliegender Erfindung weist daher die annähernd rechteckige Kontur der verbundenen Schwingeinheiten oder Schwingköpfe mit der gemeinsamen Schwingungsmasse ein Seitenverhältnis von A/B ≥ 2,0 auf.

Gemäß einer weiteren bevorzugten Ausführungsform vorliegender Vibrationsschweißvorrichtung weist das Werkzeug zur Aufnahme des Bauteils eine Länge von mindestens 1 m, vorzugsweise eine Länge von ≥ 2 m, auf. Die Werkzeuglänge unterstreicht, dass gerade die Kombination mehrerer in Querrichtung schwingender und mechanisch gekoppelter Schwingeinheiten oder Schwingköpfe mit einem länglichen Werkzeug das stabile Vibrationsschweißen in Querrichtung zur Werkzeug- bzw. Bauteillänge unterstützt.

Vorliegende Erfindung umfasst ebenfalls die Verwendung einer Vibrationsschweißvorrichtung gemäß einer der oben beschriebenen Ausführungsformen zum Verschweißen von mindestens zwei länglichen Bauteilen, die ein Seitenverhältnis einer langen Seite zu einer kurzen Seite über eins aufweisen, wobei die verschweißenden Schwingungen annähernd parallel zur kürzeren Seite der miteinander zu verbindenden Bauteile ausgerichtet sind.

Des Weiteren offenbart vorliegende Erfindung ein Verfahren zum Verbinden von mindestens zwei länglichen Bauteilen mittels Vibrationsschweißen, insbesondere mit einer Vibrationsschweißvorrichtung gemäß einer der oben beschriebenen Ausführungsformen. Das erfindungsgemäße Vibrationsschweißverfahren weist die folgenden Schritte auf: Einspannen eines länglichen Bauteils in ein Werkzeug, welches mechanisch mit mindestens drei mechanisch untereinander gekoppelten Schwingeinheiten oder mindestens drei mechanisch untereinander gekoppelten Schwingköpfen einer Vibrationsschweißvorrichtung verbunden ist, Erzeugen von Schwingungen des Bauteils über das mit den Schwingeinheiten oder den Schwingköpfen verbundene Werkzeug derart, dass eine erste Richtung der Schwingungen ungleich einer Längsachse des Bauteils, vorzugsweise quer zu der Längsachse des Bauteils, ausgerichtet ist, und Verbinden der mindestens zwei Bauteile, indem das erste schwingende Bauteil und das zweite Bauteil gegeneinander gedrückt werden.

In diesem Zusammenhang hat es sich als vorteilhaft erwiesen, die Schwingungen der mehreren miteinander gekoppelten Schwingeinheiten oder Schwingköpfe derart auf das längliche Bauteil zu übertragen, dass dieses trotz seiner Länge eine verlässliche quer zu seiner Längsachse ausgerichtete Querschwingung zum Verbinden mit einem weiteren Bauteil ausführt. Dies wird gerade dadurch erzeugt, dass die mehreren Schwingeinheiten oder die mehreren Schwingköpfe mechanisch miteinander gekoppelt sind. Vorzugsweise erfolgt eine erste Kopplung über das Werkzeug oder ein mit diesem verwendetes Kopplungselement, welches neben dem Werkzeug auch eine gleichzeitige Verbindung zu jedem der Schwingeinheiten oder Schwingköpfe herstellt. In Kombination dazu ist es ebenfalls bevorzugt, die Schwingeinheiten oder Schwingköpfe über ihre Brücken miteinander zu verbinden. Entsprechend ergibt sich eine als ein Schwingkopf wirkende Anordnung, die einen ausreichenden Längsabschnitt des länglichen Bauteils abdeckt, um über diesen Querschwingungen zum Verbinden mit einem weiteren Bauteil zu übertragen. Zudem folgt aus obiger Beschreibung, dass die Schwingeinheiten oder die Schwingköpfe bevorzugt zweimal mechanisch miteinander gekoppelt sind, nämlich werkzeugseitig und brückenseitig.

Erfindungsgemäß bevorzugt werden die Schwingung erzeugenden Spulen gemeinsam von einem Netzteil bestromt und die gekoppelten Schwingeinheiten wirken als eine einzelne Schwingeinheit.

Ergänzend zur mechanischen Kopplung der mehreren Schwingeinheiten weist das Vibrationsschweißverfahren die zusätzlichen Schritte auf: Ansteuern mindestens einer Schwingeinheit als Master-Schwingeinheit oder Ansteuern mindestens eines Schwingkopfs als Master-Schwingkopf und Ansteuern der verbleibenden Schwingeinheiten jeweils als Slave-Schwingeinlieit oder der verbleibenden Schwingköpfe jeweils als Slave-Schwingkopf in Bezug auf die Master-Schwingeinheit oder den Master-Schwingkopf. Basierend auf dieser bevorzugten Verfahrensführung ist zusätzlich zur mechanischen Abstimmung der Schwingeinheiten und/oder Schwingköpfe durch physische Kopplung eine elektronische Kopplung bevorzugt (siehe oben). Die elektronische Kopplung über eine Master-Slave-Steuerung bildet bevorzugt eine zusätzliche Unterstützung für einen synchronisierten Betrieb der mehreren Schwingeinheiten und/oder Schwingköpfe.

Vorliegende Erfindung umfasst zudem ein Herstellungsverfahren für eine Vibrationsschweißvorrichtung, welches die folgenden Schritte aufweist: Bereitstellen von mindestens drei Schwingeinheiten oder Schwingköpfen jeweils bestehend aus mindestens einem Paar einander gegenüberliegender elektromagnetischer Spulen mit einem dazwischen angeordneten federunterstützten Schwinger, Verbinden der mindestens drei Schwingeinheiten oder Schwingköpfe über ein längliches Werkzeug, mit dem ein zu verschweißendes Bauteil bewegbar ist, wobei das längliche Werkzeug in Bezug auf die mindestens drei Schwingeinheiten derart angeordnet ist, dass eine erste Richtung der Schwingungen der Schwingeinheiten oder der Schwingköpfe ungleich einer Längsachse des länglichen Werkzeugs ausgerichtet ist.

Im Rahmen dieses Herstellungsverfahrens ist es zudem bevorzugt, die mindestens drei Schwingeinheiten in paralleler Anordnung an einer gemeinsamen Brücke zu befestigen. Gemäß einer weiteren Alternative ist bevorzugt, die mindestens drei Schwingköpfe in paralleler Anordnung mechanisch über ihre Brücken aneinander zu koppeln. Dies hat den bereits oben beschriebenen Effekt, dass die mehreren miteinander kombinierten Schwingeinheiten oder Schwingköpfe als ein einziger Schwingkopf wirken.

Gemäß einer weiteren bevorzugten Ausführungsform vorliegender Erfindung umfasst das Herstellungsverfahren den weiteren Schritt: Verbinden der Schwingeinheiten oder Schwingköpfe zu einer mechanischen Gesamteinheit, welche eine annähernd rechteckige Kontur mit einem Seitenverhältnis von vorzugsweise A/B ≥ 1,0, definiert, in dem A parallel zu einer ersten Richtung der Schwingungen der Schwingeinheiten oder Schwingköpfe und B parallel zu einer Längsachse des Werkzeugs angeordnet sind.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine schematische Darstellung einer bevorzugten Ausführungsform eines Schwingkopfes,
- Figur 2A: eine schematische Darstellung von zwei übereinander angeordneten L-förmigen Bauteilen, die miteinander verschweißt werden sollen,
- Figur 2B: eine schematische Darstellung von zwei miteinander zu verschweißenden U-förmigen Bauteilen,
- Figur 3: eine bevorzugte Ausführungsform einer Vibrationsschweißvorrichtung mit drei Schwingeinheiten, die mechanisch über ein gemeinsames Werkzeug miteinander verbunden sind,
- Figur 4: eine schematische Darstellung der Vibrationsvorrichtung gemäß Figur 5 in einer perspektivischen Darstellung mit einem Werkzeug für ein U-förmiges Bauteil,
- Figur 5: eine schematische Darstellung einer bevorzugten Ausführungsform einer Vibrationsschweißvorrichtung mit drei Schwingeinheiten, die über ein gemeinsames Werkzeug sowie eine gemeinsame Brücke physisch miteinander verbunden sind,
- Figur 6: eine perspektivische Darstellung der bevorzugten Ausführungsform der Vibrationsschweißvorrichtung gemäß Figur 7,
- Figur 7: eine schematische Seitenansicht einer bevorzugten Ausführungsform der Vibrationsschweißvorrichtung bestehend aus drei Schwingköpfen, die über ein gemeinsames Werkzeug und eine gemeinsame Überbrückung miteinander verbunden sind,

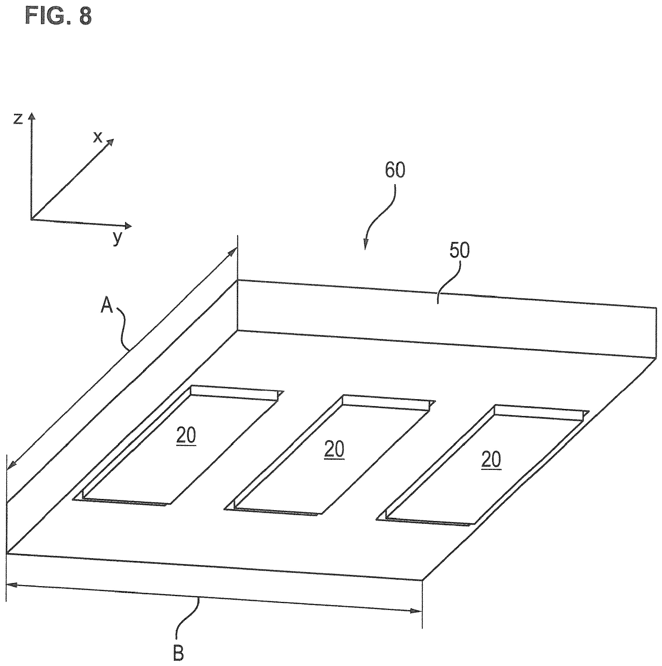

- Figur 8: eine perspektivische Ansicht der bevorzugten Ausführungsform aus Figur 4, hier ohne Werkzeug dargestellt.
- Figur 9: ein Flussdiagramm einer bevorzugten Ausführungsform des Verbindungsverfahrens vorliegender Erfindung und
- Figur 10: ein Flussdiagramm einer bevorzugten Ausführungsform eines Herstellungsverfahrens gemäß vorliegender Erfindung.

### 5. Detaillierte Beschreibung der bevorzugten Ausführungsformen

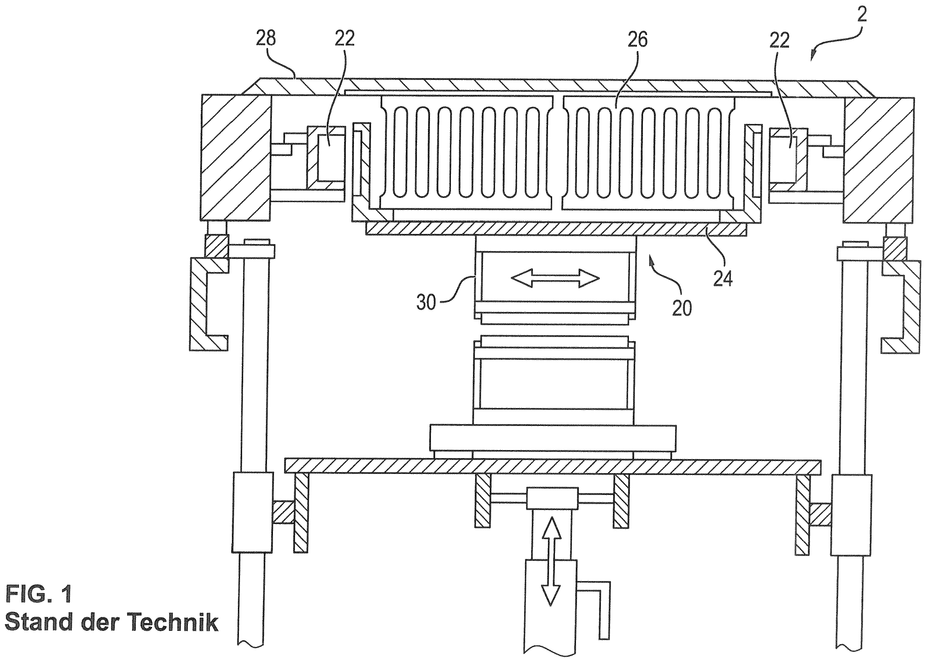

Figur 1 zeigt einen bekannten Schwingkopf 2 mit einer bevorzugten Schwingeinheit 20. Die Schwingeinheit 20 umfasst ein Paar einander gegenüberliegend angeordnete elektromagnetische Spulen 22. An dieser Stelle ist ebenfalls die Nutzung mehrerer Paare von gegenüberliegend angeordneten elektromagnetischen Spulen 22 bevorzugt. Bei wechselseitiger Bestromung versetzen die Spulen 22 einen zwischen ihnen angeordneten Schwinger 24 in eine lineare Schwingung. Zur Unterstützung der Schwingung des Schwingers 24 ist dieser über ein Federpaket 26 an einer Brücke 28 befestigt. Der Schwinger 24 ist mit einem Werkzeug 30 verbunden. Das Werkzeug 30 dient der Aufnahme eines Bauteils, um die Schwingungen des Schwingers 24 auf das Bauteil zu übertragen. Wird das schwingende Bauteil gegen ein weiteres Bauteil gedrückt, führt die über die Schwingungen erzeugte Reibungswärme zum Verbinden der beiden Bauteile. Entsprechend der Anordnung der Spulen 22 schwingt der Schwinger 24 und somit auch das Werkzeug 30 in Längsrichtung des Schwingers 24 (siehe Doppelpfeil in Figur 1).

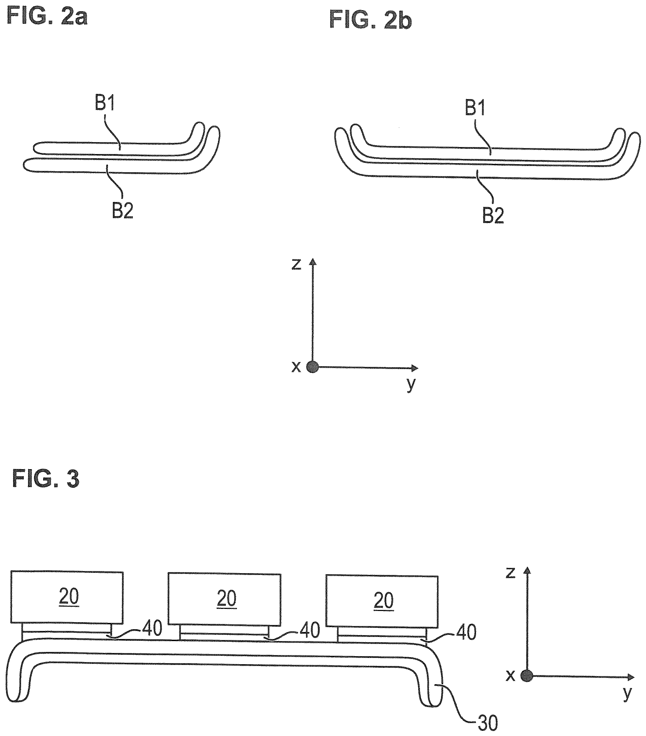

Gewöhnlich werden Bauteile B1, B2 in Längsrichtung in Schwingungen versetzt, d. h. in Y-Richtung, um sie mittels Vibrationsschweißen zu verbinden. Dies würde bei den bevorzugten L- und U-förmigen Bauteilen B1, B2 der Figuren 2A und 2B zu einer Beschädigung der Bauteile führen. Um eine Beschädigung zu vermeiden, werden die Bauteile B1, B2 bevorzugt in X-Richtung in Schwingungen versetzt, d. h. vorzugsweise quer zur Längsachse der Bauteile B1, B2.

Um ein in Y-Richtung verlaufendes langgestrecktes Bauteil B1, B2 mit U- oder L-Form verlässlich zu verschweißen, wird es quer zu seiner Längsrichtung, also in X-Richtung, in Schwingungen versetzt. Zu diesem Zweck werden mindestens drei Schwingeinheiten 20 oder mindestens drei Schwingköpfe 2 miteinander mechanisch gekoppelt, um annähernd gleichmäßig zu schwingen. Schwingeinheit 20 bezeichnet in diesem Zusammenhang die Kombination aus Spulen 22, Schwinger 24, Federpaket 26 und Brücke 28.

Die mindestens drei Schwingeinheiten 20 sind mit ihrer Schwingungsrichtung parallel zur X-Richtung und damit quer zur Längsachse der Bauteile B1, B2 angeordnet. Zudem sind die Schwingungseinheiten 20 parallel zueinander angeordnet, wie man in Figur 3 erkennen kann.

Die mindestens drei Schwingeinheiten 20 werden in Längsrichtung der Bauteile B1, B2 gleichmäßig verteilt angeordnet, um die Schwingung möglichst gleichmäßig auf die gesamte Bauteillänge oder einen größeren Teil der Bauteillänge zu übertragen. Daher ist es ebenfalls bevorzugt, mehr als drei Schwingeinheiten 20 in paralleler Anordnung einzusetzen, bspw. vier, fünf oder sechs Schwingeinheiten 20 oder Schwingköpfe 2.

Die Schwingeinheiten 20 sind alle bevorzugt direkt oder indirekt über ein gemeinsames Kopplungselement 40 mit dem gleichen Werkzeug 30 verbunden. Dies unterstützt den bevorzugten Betrieb der mehreren Schwingeinheiten 20 mit annähernd derselben Frequenz und Amplitude. Auf diese Weise werden verlässliche Schweißergebnisse erzielt.

Aufgrund der mechanischen Kopplung der mehreren Schwingeinheiten 20 über das gemeinsame Werkzeug 30 wirkt die Vibrationsschweißvorrichtung wie ein einzelner Schwingkopf.

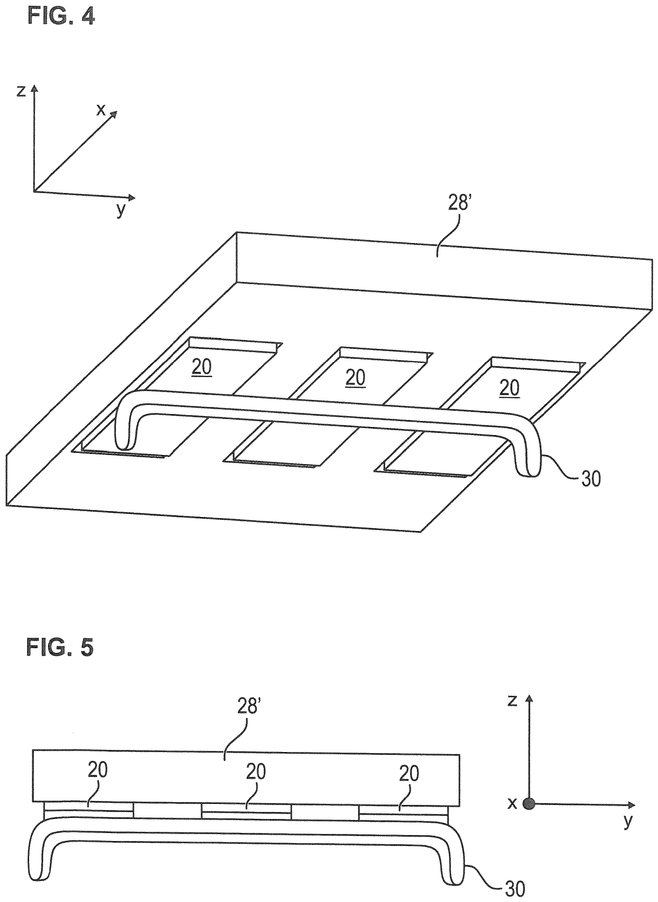

Gemäß einer weiteren bevorzugten Ausführungsform vorliegender Erfindung wird der gemeinsame Betrieb der mindestens drei Schwingeinheiten 20 zusätzlich dadurch verbessert, dass die Schwingeinheiten 20 an einer gemeinsamen Brücke 28' befestigt sind. Entsprechend unterstützt und hält die gemeinsame Brücke 28' die mehreren Federpakete 26, die Spulenpaare 22 und den Schwinger 24 der mehreren Schwingeinheiten 20. Dies ist schematisch in Figur 4 veranschaulicht. Dadurch sind die mindestens drei Schwingeinheiten 20 doppelt mechanisch miteinander gekoppelt, nämlich über das sich bevorzugt durchgängig erstreckende Werkzeug 30 und die gemeinsame Brücke 28'.

Aus Gründen der vereinfachten Darstellung ist in den schematischen Zeichnungen der Figuren 4 und 5 das Kopplungselement 40 nicht gezeigt. Dennoch ist vorzugsweise das Kopplungselement 40 zur Verbindung von Schwingeinheit 20 und Werkzeug 30 zu verwenden.

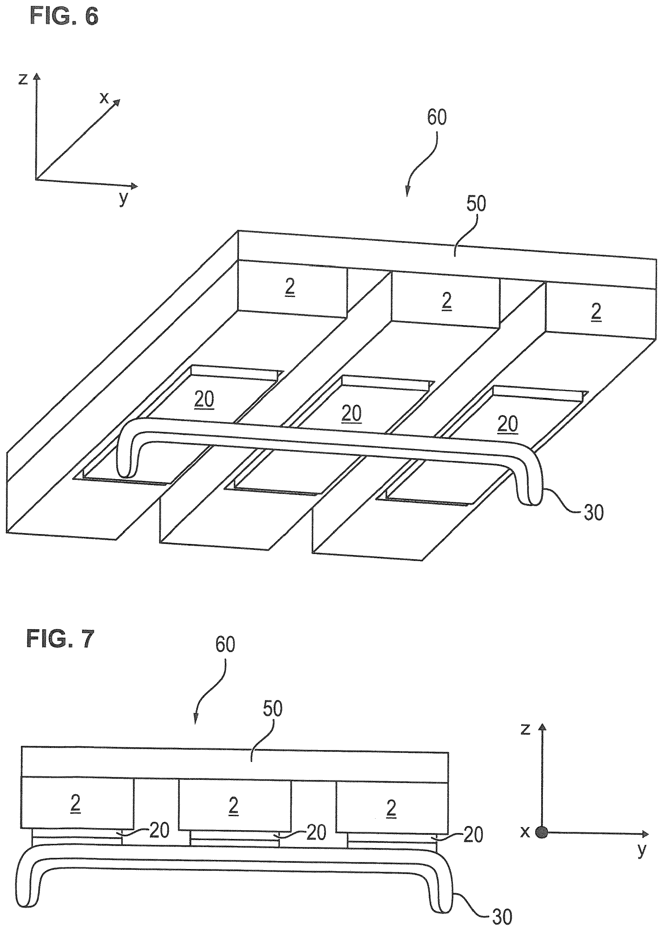

Die Figuren 6 und 7 zeigen eine weitere bevorzugte Ausführungsform vorliegender Erfindung. Anstelle der oben beschriebenen Schwingeinheit 20 sind mindestens drei Schwingköpfe 2 mechanisch in paralleler Anordnung miteinander gekoppelt. Gemäß einer bevorzugten Alternative erfolgt die mechanische Kopplung über das durchgehende Werkzeug 30. Das Werkzeug 30 ist dazu mit jedem Setzkopf 2 über ein bevorzugtes Kopplungselement 40 (nicht gezeigt) verbunden.

Wie man anhand von Figur 6 erkennen kann, enthält jeder Schwingkopf 2 als Unterkomponente eine Schwingeinheit 20, wie aus dem Stand der Technik gemäß Figur 1 bekannt ist.

Zur Unterstützung des gemeinsamen Betriebs der Schwingköpfe 2 sind diese bevorzugt über ein Verbindungselement 50 mechanisch miteinander verbunden. Das Verbindungselement 50 erfüllt damit die gleiche Funktion wie die oben beschriebene gemeinsame Brücke 28'.

In gleicher Weise wie in der Anordnung der Figur 4 wirken die mechanischen Kopplungen über das Werkzeug 30 und die gemeinsame Brücke 28' oder das Verbindungselement 50 unterstützend für das vibrationsschweißende Schwingverhalten in X-Richtung, also quer zur Längsachse des Werkzeugs 30 oder der Bauteile 1, 2. Durch die doppelte mechanische Kopplung der Schwingeinheiten 20 oder der Setzköpfe 2 über das Werkzeug 30 und die gemeinsame Brücke 28' oder das Verbindungselement 50 entsteht eine mechanische Gesamteinheit 60. Diese Gesamteinheit 60 hat vorzugsweise eine annähernd rechteckige Kontur mit den Seiten A und B. Die Seite B verläuft parallel zur Y-Richtung oder zur Längsachse von Werkzeug 30 und Bauteil B1, B2. Die Seite A ist in Schwingungsrichtung der Vibrationsschweißvorrichtung orientiert, also in X-Richtung.

Um ein Schwingverhalten in X-Richtung mechanisch zu unterstützen, ist es bevorzugt, die Länge der Seite A größer oder zumindest gleich groß wie die Länge der Seite B der Gesamteinheit 60 einzustellen. Je größer das Seitenverhältnis der Seite A zur Seite B ausfällt, umso ausgeprägter ist die mechanische Tendenz des Gesamtsystems 60, in X-Richtung stabil zu schwingen. In den meisten Fällen wird sich schon deswegen bei entsprechend passender Wahl der Geometrie der Gesamteinheit 60 eine harmonische Schwingung mit gleicher Frequenz, Phase und Amplitude während des Vibrationsschweißens ergeben.

Daher ist es bevorzugt, wenn das Seitenverhältnis A/B der Gesamteinheit 60 in einem bevorzugten Bereich von A/B ≥ 1,0 liegt.

Gemäß einer weiteren bevorzugten Ausführungsform vorliegender Erfindung, die beispielsweise auf die Verbindung und Herstellung langgestreckter Leuchten, Armaturentafeln, Paneele für Möbel- und/oder Verpackungskonstruktionen gerichtet ist, liegt das Seitenverhältnis A/B der Gesamteinheit 60 in einem bevorzugten Bereich von A/B ≥ 2,0.

Zudem ist es bevorzugt, die gekoppelten Schwingeinheiten oder Schwingköpfe (siehe unten) mit einem Werkzeug der Länge von mindestens 1 m, vorzugsweise eine Länge von ≥ 2 m, zu verbinden. Die Werkzeuglänge gewährleistet, dass die Querschwingungen der Kombination der mehreren in Querrichtung schwingenden und mechanisch gekoppelter Schwingeinheiten oder Schwingköpfe gleichmäßig auf die Gesamtlänge des Bauteils übertragbar sind. Zu diesem Zweck ist es von Vorteil, die mehreren Schwingeinheiten oder Schwingköpfe gleichmäßig über die Länge des Werkzeugs verteilt anzuordnen.

Gemäß einer weiteren bevorzugten Ausführungsform vorliegender Erfindung wird eine der mehreren Schwingeinheiten 20 oder einer der mehreren Schwingköpfe 2 als Master betrieben, wie es in EP 1 772 253 B1 beschrieben ist. Entsprechend werden die mindestens zwei anderen Schwingeinheiten oder Schwingköpfe 2 als Slave angesteuert. Für die konkrete Master-Slave-Steuerung wird auf EP 1 772 253 B1 verwiesen. Durch die angesprochene Master-Slave-Steuerung wird zusätzlich bevorzugt eine unharmonische Schwingung harmonisiert, was vorzugsweise ein Torkeln des Werkzeugs oder der miteinander zu verbindenden Bauteile verhindert. In diesem Zusammenhang ist hervorzuheben, dass vorzugsweise die in der Mitte angeordnete Schwingeinheit 20 oder der in der Mitte angeordnete Schwingkopf 2 als Master-Schwingeinheit bzw. Master-Schwingkopf verwendet wird.

Die oben beschriebenen bevorzugten Ausführungsformen der Vibrationsschweißvorrichtung werden vorzugsweise für das Vibrationsschweißen von lang gestreckten Bauteilen verwendet. Dies sind vorzugsweise Leuchten, Stoßfänger, Armaturentafeln oder Anwendungen aus anderen Bereichen als dem Automobilsektor. Diese langgestreckten Bauteile zeichnen sich durch ein Seitenverhältnis der langen Bauteilseite zur kurzen Bauteilseite über eins aus. Entsprechend obiger Beschreibung verlaufen die Schwingungen zum Vibrationsschweißen dieser Bauteile parallel zur kurzen Seite der langgestreckten Bauteile.

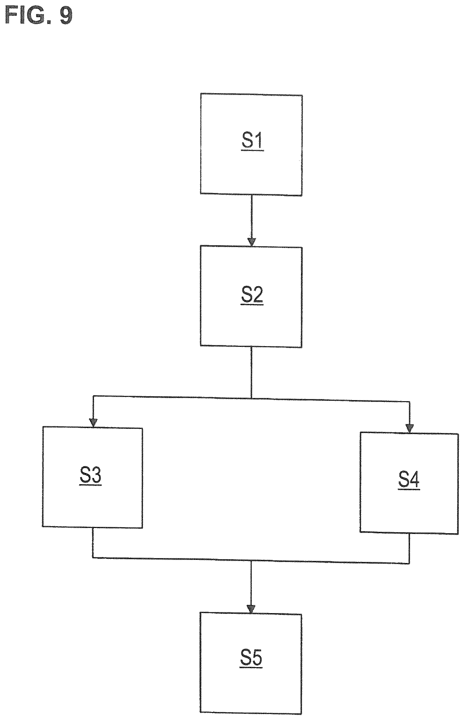

Das erfindungsgemäße Verbindungsverfahren für mindestens zwei längliche Bauteile mittels Vibrationsschweißen wird anhand des Flussdiagramms in Figur 9 zusammengefasst. In einem ersten Schritt S1 erfolgt das Einspannen des langgestreckten Bauteils B1 im Werkzeug 30. Gemäß der oben beschriebenen bevorzugten Ausführungsformen der Vibrationsschweißvorrichtung ist das Werkzeug mechanisch mit mindestens drei Schwingeinheiten 20 oder mindestens drei Schwingköpfen 2 der Vibrationsschweißvorrichtung verbunden.

Nachfolgend werden im Schritt S2 die miteinander zu verbindenden Bauteile über das mit den Schwingeinheiten 20 oder das mit den Schwingköpfen 2 verbundene Werkzeug 3 in Relativschwingungen versetzt. Diese Relativschwingungen sind ungleich der Längsachse des Bauteils orientiert, vorzugsweise quer zur Längsachse der Bauteile.

Gemäß einer bevorzugten Ausführungsform des vorliegenden Verbindungsverfahrens werden im Schritt S3 mindestens eine Schwingeinheit oder mindestens ein Schwingkopf 2 als Master-Schwingeinheit oder als Master-Schwingkopf angesteuert. Zudem werden im bevorzugten Schritt S4 die verbleibenden Schwingeinheiten 20 als Slave-Schwingeinheiten oder die verbleibenden Schwingköpfe 2 als Slave-Schwingköpfe in Bezug auf die Master-Schwingeinheit oder den Master-Schwingkopf angesteuert. Im Schritt S5 erfolgt dann das Verbinden der mindestens zwei Bauteile, in dem das erste schwingende Bauteil in Kontakt mit dem zweiten Bauteil B2 gebracht wird.

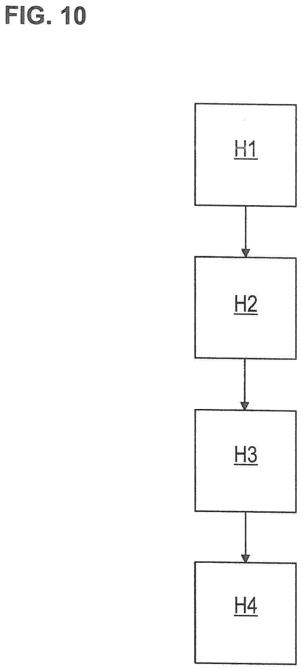

Zudem umfasst vorliegende Erfindung ein Herstellungsverfahren für eine Vibrationsschweißvorrichtung, welches bezugnehmend auf das Flussdiagramm in Figur 10 beschrieben wird. Dieses Herstellungsverfahren weist die folgenden Schritte auf: zunächst erfolgt im Schritt H1 ein Bereitstellen von mindestens drei Schwingeinheiten 20 oder Schwingköpfen 2 mit dem bereits oben beschriebenen konstruktiven Aufbau. Nachfolgend werden dann im Schritt H2 die mindestens drei Schwingeinheiten 20 oder die Schwingköpfe 2 über das längliche Werkzeug 30 miteinander verbunden. Das Werkzeug 30 wird dabei derart mit den Schwingeinheiten 20 oder den Schwingköpfen 2 verbunden, dass eine erste Richtung der Schwingungen der Schwingeinheiten 20 oder der Schwingköpfe 2 ungleich einer Längsachse des länglichen Werkzeugs 30 ausgerichtet ist.

Im nächsten Schritt H3 werden die mindestens drei Schwingeinheiten 20 oder Schwingköpfe 2 in paralleler Anordnung an einer gemeinsamen Brücke 28' oder dem oben beschriebenen Verbindungselement 50 befestigt. Aufgrund der bevorzugt mechanischen Kopplungen der mindestens drei Schwingeinheiten 20 oder der mindestens drei Schwingköpfe 2 über das Werkzeug 30 und die gemeinsame Brücke 28' oder das Verbindungselement 50 ergibt sich eine mechanische Gesamteinheit 60 der Vibrationsschweißvorrichtung. Diese mechanische Gesamteinheit 60 weist vorzugsweise eine annähernd rechteckige Kontur mit einem Seitenverhältnis von vorzugsweise A/B ≥ 1,0und weiter bevorzugt von A/B ≥ 2 auf. Die Seitenflächen A, B der Gesamteinheit 60 sind gemäß obiger Beschreibung orientiert. Zur Unterstützung eines harmonischen Schwingungsverhaltens der Gesamteinheit 60 ist es somit bevorzugt, die Schwingeinheiten 20 oder die Schwingköpfe 2 entsprechend der Ausbildung einer derartigen Gesamtheit 60 miteinander zu verbinden (Schritt H4).

### Bezugszeichenliste

- 2: Schwingkopf
- 20: Schwingeinheit
- 22: Spulen
- 24: Schwinger
- 26: Federpaket
- 28: Brücke
- 28': gemeinsame Brücke mehrerer Schwingeinheiten 20
- 30: Werkzeug
- 40: Kopplungselement
- 50: Verbindungselement
- B1, B2: Bauteile

## Patentansprüche

1. Eine Vibrationsschweißvorrichtung mit einem mechanisch gekoppelten Mehrfachschwinger, die die folgenden Merkmale aufweist:
a. mindestens drei Schwingeinheiten (20) jeweils bestehend aus mindestens einem Paar einander gegenüberliegender elektromagnetischer Spulen (22), mit denen ein dazwischen angeordneter federunterstützter Schwinger (24) in lineare Schwingungen in einer ersten Richtung versetzbar ist,
b. ein längliches Werkzeug (30), mit dem ein zu verschweißendes Bauteil (B1, B2) bewegbar ist und welches mit allen Schwingeinheiten (20) mechanisch verbunden ist, wobei
c. die Schwingeinheiten (20) in Bezug auf das längliche Werkzeug (30) derart angeordnet sind, dass die erste Richtung der Schwingungen der einzelnen Schwingeinheiten (20) annähernd quer zu einer Längsachse des Werkzeugs (30) ausgerichtet ist, sodass während eines Vibrationsschweißvorgangs zwei Bauteile (B1, B2) durch Schwingungen ungleich einer Längsrichtung, insbesondere quer zu einer Längsrichtung, der Bauteile (B1, B2) miteinander verschweißbar sind.

2. Vibrationsschweißvorrichtung gemäß Patentanspruch 1, in der die mindestens drei Schwingeinheiten (20) an einer gemeinsamen Brücke (28') federunterstützt befestigt sind.

3. Vibrationsschweißvorrichtung gemäß Patentanspruch 1 oder 2, in der eine der Schwingeinheiten (20) eine Master-Schwingeinheit bildet, während die verbleibenden Schwingeinheiten (20) jeweils eine Slave-Schwingeinheit in Bezug auf die Master-Schwingeinheit bilden, sodass alle Schwingeinheiten (20) synchron betreibbar sind.

4. Vibrationsschweißvorrichtung gemäß Patentanspruch 1, in der der mechanisch gekoppelte Mehrfachschwinger mindestens drei Schwingköpfe (2) aufweist, die jeweils das Paar einander gegenüberliegend angeordneter elektromagnetischer Spulen (22) mit dem zwischen diesen Spulen (22) angeordneten Schwinger (24) umfassen, dessen Schwinger (24) jeweils über ein Federpaket (26) schwingend an einer Brücke (28) befestigt ist, wobei
a. die Brücken (28) der mehreren Schwingköpfe (2) mechanisch miteinander verbunden sind, und
b. die Schwingköpfe (2) über das längliche Werkzeug (30) miteinander verbunden sind.

5. Vibrationsschweißvorrichtung gemäß einem der vorhergehenden Patentansprüche, in der die mechanisch miteinander gekoppelten Schwingeinheiten (20) oder Schwingköpfe (2) eine mechanische Gesamteinheit mit einer gemeinsamen Schwingungsmasse bilden, welche eine annähernd rechteckige Kontur mit einem Seitenverhältnis von A/B ≥ 1,0, vorzugsweise A/B ≥ 2, definiert, in dem A parallel zu der ersten Richtung der Schwingungen der Schwingeinheiten (20) und B parallel zu einer Längsachse des Werkzeugs (30) angeordnet ist.

6. Verwendung einer Vibrationsschweißvorrichtung gemäß einem der vorhergehenden Patentansprüche zum Verschweißen von mindestens zwei länglichen Bauteilen (B1, B2), die ein Seitenverhältnis einer langen Seite zu einer kurzen Seite größer eins aufweisen, wobei die verschweißenden Schwingungen annähernd parallel zur kürzeren Seite der Bauteile (B1, B2) ausgerichtet sind.

7. Verfahren zum Verbinden von mindestens zwei länglichen Bauteilen (B1, B2) mittels Vibrationsschweißen, insbesondere mit einer Vibrationsschweißvorrichtung gemäß einem der vorhergehenden Patentansprüche 1 bis 5, welches die folgenden Schritte aufweist:
a. Einspannen eines länglichen Bauteils (B1, B2) in ein Werkzeug (30), welches mechanisch mit mindestens drei untereinander mechanisch gekoppelten Schwingeinheiten (20) oder mindestens drei untereinander mechanisch gekoppelten Schwingköpfen (2) einer Vibrationsschweißvorrichtung verbunden ist,
b. Erzeugen von Schwingungen des Bauteils (B1, B2) über das mit den Schwingeinheiten (20) oder den Schwingköpfen (2) verbundene Werkzeug (30) derart, dass eine erste Richtung der Schwingungen ungleich einer Längsachse des Bauteils (B1, B2), vorzugsweise quer zu der Längsachse des Bauteils (B1, B2), ausgerichtet ist,
c. Verbinden der mindestens zwei Bauteile (B1, B2), indem das erste schwingende Bauteil (B1) und das zweite Bauteil (B2) gegeneinander gedrückt werden.

8. Verfahren gemäß Patentanspruch 7, welches den weiteren Schritt aufweist:
Ansteuern mindestens einer Schwingeinheit (20) als Master-Schwingeinheit oder Ansteuern mindestens eines Schwingkopfs (2) als Master-Schwingkopf und
Ansteuern der verbleibenden Schwingeinheiten (20) jeweils als Slave-Schwingeinheit oder der verbleibenden Schwingköpfe (2) jeweils als Slave-Schwingkopf in Bezug auf die Master-Schwingeinheit oder den Master-Schwingkopf.

9. Herstellungsverfahren für eine Vibrationsschweißvorrichtung, welches die folgenden Schritte aufweist:
a. Bereitstellen (H1) von mindestens drei Schwingeinheiten (20) oder Schwingköpfen (2) jeweils bestehend aus einem Paar einander gegenüberliegender elektromagnetischer Spulen (22) mit einem dazwischen angeordneten federunterstützten Schwinger (24),
b. Verbinden (H2) der mindestens drei Schwingeinheiten (20) oder Schwingköpfe (2) über ein längliches Werkzeug (30), mit dem ein zu verschweißendes Bauteil (B1, B2) bewegbar ist, wobei das längliche Werkzeug (30) in Bezug auf die mindestens drei Schwingeinheiten (20) oder Schwingköpfe (2) derart angeordnet ist, dass eine erste Richtung der Schwingungen der Schwingeinheiten (20) oder Schwingköpfe (2) ungleich einer Längsachse des länglichen Werkzeugs (30) ausgerichtet ist.

10. Herstellungsverfahren gemäß Patentanspruch 9, welches den weiteren Schritt aufweist:
Befestigen (H3) der mindestens drei Schwingeinheiten (20) oder Schwingköpfe (2) in paralleler Anordnung an einer gemeinsamen Brücke (28') oder einem Verbindungselement (50).

11. Herstellungsverfahren gemäß einem der vorhergehenden Patentansprüche 9 oder 10, welches den weiteren Schritt umfasst:
Bereitstellen der mechanisch miteinander gekoppelten Schwingeinheiten (20) oder Schwingköpfe (2) als eine mechanische Gesamteinheit, welche eine annähernd rechteckige Kontur mit einem Seitenverhältnis von A/B ≥ 1,0, definiert, in dem A parallel zu der ersten Richtung der Schwingungen der Schwingeinheiten (20) und B parallel zu einer Längsachse des Werkzeugs (30) angeordnet ist.

## Claims

1. A vibration welding device with a mechanically coupled multiple vibrator, with the device having the following features:
a. at least three vibration units (20), each consisting of at least one pair of electromagnetic coils (22) that oppose each other, by means of which a spring-supported vibrator (24) arranged therebetween is settable in linear vibrations in a first direction,
b. an elongated tool (30) by means of which a component (B1, B2) to be welded is movable and that is mechanically connected to all vibration units (20), wherein
c. the vibration units (20) are arranged relative to the elongated tool (30) such that the first direction of vibrations of the individual vibration units (20) is oriented approximately transverse to a longitudinal axis of the tool (30) such that, during a vibration welding process, two components (B1, B2) are weldable to each other by vibrations different than a longitudinal direction of the components (B1, B2), in particular transverse to a longitudinal direction.

2. Vibration welding device according to claim 1, in which the at least three vibration units (20) are fastened in a spring-supported manner at a common bridge (28').

3. Vibration welding device according to claim 1 or 2, in which one of the vibration units (20) forms a master vibration unit, while the remaining vibration units (20) each form a slave vibration unit with respect to the master vibration unit so that all vibration units (20) can be operated in sync.

4. Vibration welding device according to claim 1, in which the mechanically coupled multiple vibrator has at least three vibration heads (2) that each comprise the pair of opposing electromagnetic coils (22) with the vibrator (24) arranged between these coils (22), the vibrator (24) of which is vibratingly attached in each case by means of a spring package (26) to a bridge (28), wherein
a. the bridges (28) of the plurality of vibration heads (2) are mechanically connected to each other, and
b. the vibration heads (2) are connected to each other by the elongated tool (30).

5. Vibration welding device according to one of the preceding claims, in which the vibration units (20) or vibration heads (2) mechanically coupled to each other form a mechanical overall unit with a joint vibration mass that defines an approximately rectangular contour with a side ratio of A/B ≥ 1.0, preferably A/B ≥ 2, in which A is arranged parallel to the first direction of the vibrations of the vibration units (20), and B is arranged parallel to a longitudinal axis of the tool (30).

6. Use of a vibration welding device according to one of the preceding claims for welding at least two elongated components (B1, B2) that have a side ratio of a long side to a short side greater than one, wherein the welding vibrations are oriented almost parallel to the shorter side of the components (B1, B2).

7. Method for connecting at least two elongated components (B1, B2) by means of vibration welding, in particular with a vibration welding device according to one of the preceding claims 1 to 5, the method having the following steps:
a. clamping an elongated component (B1, B2) in a tool (30) that is mechanically connected to at least three vibration units (20) that are mechanically coupled to each other, or to at least three vibration heads (2) that are mechanically coupled to each other, of a vibration welding device,
b. generating vibrations of the component (B1, B2) by the tool (30) that is connected to the vibration units (20) or the vibration heads (2) such that a first direction of the vibrations is oriented different than a longitudinal axis of the component (B1, B2), preferably transverse to the longitudinal axis of the component (B1, B2),
c. connecting the at least two components (B1, B2) by pressing the first vibrating component (B1) and the second component (B2) against each other.

8. Method according to claim 7, which has the further step:
controlling at least one vibration unit (20) as a master vibration unit, or controlling at least one vibration head (2) as a master vibration head, and
controlling the remaining vibration units (20) each as slave vibration unit, or the remaining vibration heads (2) each as slave vibration head with respect to the master vibration unit or the master vibration head.

9. Production method for a vibration welding device, the method having the following steps:
a. providing (H1) at least three vibration units (20) or vibration heads (2) each consisting of one pair of electromagnetic coils (22) facing each other, with a spring-supported vibrator (24) arranged therebetween,
b. connecting (H2) the at least three vibration units (20) or vibration heads (2) by means of an elongated tool (30) with which a component to be welded is movable, wherein the elongated tool (30) is arranged relative to the at least three vibration units (20) or vibration heads (2) such that a first direction of the vibrations of the vibration units (20) or vibration heads (2) is oriented different than a longitudinal axis of the elongated tool (30).

10. Production method according to claim 9, which has the further step:
fastening (H3) the at least three vibration units (20) or vibration heads (2) in a parallel arrangement at a common bridge (28') or a connecting element (50).

11. Production method according to one of the preceding claims 9 or 10, that comprises the additional step:
providing the vibration units (20) or vibration heads (2), which are mechanically coupled to each other, as a mechanical overall unit that defines an approximately rectangular contour with a side ratio of A/B ≥ 1.0, in which A is arranged parallel to the first direction of the vibrations of the vibration units (20), and B is arranged parallel to a longitudinal axis of the tool (30).

## Revendications

1. Dispositif de soudage par vibrations avec un oscillateur multiple accouplé mécaniquement, présentant les caractéristiques suivantes :
a. au moins trois unités oscillantes (20) respectivement constituées d'au moins une paire de bobines électromagnétiques (22) opposées, avec lesquelles un oscillateur (24) assisté par ressort disposé entre celles-ci peut être mis en oscillations linéaires dans une première direction,
b. un outil allongé (30) permettant de déplacer une pièce de construction à souder (B1, B2) et relié mécaniquement à toutes les unités oscillantes (20), dans lequel
c. les unités oscillantes (20) sont disposées de telle façon par rapport à l'outil allongé (30), que la première direction des oscillations des différentes unités oscillantes (20) est orientée approximativement perpendiculairement à un axe longitudinal de l'outil (30), de sorte que pendant une opération de soudage par vibrations, deux pièces de construction (B1, B2) peuvent être soudées l'une à l'autre par des oscillations dans une direction autre que longitudinale, en particulier perpendiculairement à une direction longitudinale, des pièces de construction (B1, B2).

2. Dispositif de soudage par vibrations selon la revendication 1, dans lequel les au moins trois unités oscillantes (20) sont fixées sur un pont commun (28') tout en étant assistées par ressort.

3. Dispositif de soudage par vibrations selon la revendication 1 ou 2, dans lequel l'une des unités oscillantes (20) forme une unité oscillante maître, tandis que les autres unités oscillantes (20) forment respectivement une unité oscillante esclave par rapport à l'unité oscillante maître, de sorte que toutes les unités oscillantes (20) peuvent fonctionner de manière synchronisée.

4. Dispositif de soudage par vibrations selon la revendication 1, dans lequel l'oscillateur multiple accouplé mécaniquement présente au moins trois têtes oscillantes (2), lesquelles comportent respectivement la paire de bobines électromagnétiques (22) disposées de manière opposée l'une par rapport à l'autre avec l'oscillateur (24) disposé entre ces bobines (22), dont l'oscillateur (24) est fixé respectivement de façon oscillante à un pont (28) par le biais d'un paquet de ressorts (26), dans lequel
a. les ponts (28) de la pluralité de têtes oscillantes (2) sont reliés les uns aux autres mécaniquement, et
b. les têtes oscillantes (2) sont reliées les unes aux autres par le biais de l'outil allongé (30).

5. Dispositif de soudage par vibrations selon l'une des revendications précédentes, dans lequel les unités oscillantes (20) ou les têtes oscillantes (2) accouplées mécaniquement les unes aux autres forment une unité globale mécanique avec une masse d'oscillation commune, laquelle définit un contour approximativement rectangulaire avec un rapport de côtés de A/B ≥ 1,0, préférentiellement de A/B ≥ 2, où A est disposé parallèlement à la première direction des oscillations des unités oscillantes (20) et B est disposé parallèlement à un axe longitudinal de l'outil (30).

6. Utilisation d'un dispositif de soudage par vibrations selon l'une des revendications précédentes pour le soudage d'au moins deux pièces de construction allongées (B1, B2) présentant un rapport de côtés d'un côté long à un côté court supérieur à un, dans laquelle les oscillations de soudage sont orientées approximativement parallèlement au côté court des pièces de construction (B1, B2).

7. Procédé de raccordement d'au moins deux pièces de construction allongées (B1, B2) au moyen d'un soudage par vibrations, en particulier à l'aide d'un dispositif de soudage par vibrations selon l'une des revendications 1 à 5, présentant les étapes suivantes :
a. serrage d'une pièce de construction allongée (B1, B2) dans un outil (30), lequel est relié mécaniquement à au moins trois unités oscillantes (20) accouplées mécaniquement les unes aux autres ou au moins trois têtes oscillantes (2) accouplées mécaniquement les unes aux autres d'un dispositif de soudage par vibrations,
b. génération d'oscillations de la pièce de construction (B1, B2) par le biais de l'outil (30) relié aux unités oscillantes (20) ou aux têtes oscillantes (2), de telle façon qu'une première direction des oscillations est orientée autrement qu'un axe longitudinal de la pièce de construction (B1, B2), préférentiellement perpendiculairement à l'axe longitudinal de la pièce de construction (B1, B2),
c. raccordement des au moins deux pièces de construction (B1, B2), en pressant la première pièce de construction oscillante (B1) et la deuxième pièce de construction (B2) l'une contre l'autre.

8. Procédé selon la revendication 7, présentant l'étape supplémentaire suivante :
- actionnement d'au moins une unité oscillante (20) en tant qu'unité oscillante maître ou actionnement d'au moins une tête oscillante (2) en tant que tête oscillante maître et
- actionnement des autres unités oscillantes (20) respectivement en tant qu'unité oscillante esclave ou des autres têtes oscillantes (2) respectivement en tant que tête oscillante esclave par rapport à l'unité oscillante maître ou à la tête oscillante maître.

9. Procédé de fabrication d'un dispositif de soudage par vibrations, présentant les étapes suivantes :
a. mise à disposition (H1) d'au moins trois unités oscillantes (20) ou têtes oscillantes (2) respectivement constituées d'une paire de bobines électromagnétiques (22) opposées, avec un oscillateur (24) assisté par ressort disposé entre celles-ci,
b. raccordement (H2) des au moins trois unités oscillantes (20) ou têtes oscillantes (2) par le biais d'un outil allongé (30) permettant de déplacer une pièce de construction à souder (B 1, B2), dans lequel l'outil allongé (30) est disposé de telle façon par rapport aux au moins trois unités oscillantes (20) ou têtes oscillantes (2), qu'une première direction des oscillations des unités oscillantes (20) ou têtes oscillantes (2) est orientée autrement qu'un axe longitudinal de l'outil allongé (30).

10. Procédé de fabrication selon la revendication 9, présentant l'étape supplémentaire suivante :
- fixation (H3) des au moins trois unités oscillantes (20) ou têtes oscillantes (2) selon un agencement parallèle sur un pont commun (28') ou un élément de raccordement (50).

11. Procédé de fabrication selon l'une des revendications précédentes 9 ou 10, comportant l'étape supplémentaire suivante :
- mise à disposition des unités oscillantes (20) ou des têtes oscillantes (2) accouplées mécaniquement les unes aux autres en tant qu'unité globale mécanique, laquelle définit un contour approximativement rectangulaire avec un rapport de côtés de A/B ≥ 1,0, où A est disposé parallèlement à la première direction des oscillations des unités oscillantes (20) et B est disposé parallèlement à un axe longitudinal de l'outil (30).
